# EUROPEAN PATENT SPECIFICATION

(11) **EP 3 531 519 B1**
(45) Date of publication and mention of the grant of the patent: **12.10.2022**
(21) Application number: 18158991.2
(22) Date of filing: 27.02.2018
(51) Int. Cl.: H02G 3/08

(54) **ELECTRICAL JUNCTION BOX**
STROMVERTEILERKASTEN
BOÎTE DE DÉRIVATION ÉLECTRIQUE

(43) Date of publication of application: 28.08.2019
(73) Proprietor: Aptiv Technologies Limited, St. Michael (BB)
(72) Inventor: KOT, Pawel, 32353 Trzyciaz (PL); HEBDA, Dariusz, 32-020 WIELICZKA (PL); WOZNICZKA, Mariusz, 33-650 KETY (PL)
(74) Representative: Manitz Finsterwald Patent- und Rechtsanwaltspartnerschaft mbB

(56) References cited:
- EP-A1- 1 914 843
- WO-A1-2017/086127
- JP-A- 2009 033 870
- US-A1- 2007 187 288
- US-A1- 2012 024 558
- US-A1- 2015 101 862
- Delphi: "Global Connection System Catalog 2006", , 31 December 2006 (2006-12-31), XP002783665, Retrieved from the Internet: URL:https://www.powerandsignal.com/docs/DC S%20Global%20Catalog.pdf [retrieved on 2018-08-07]

## Description

### TECHNICAL FIELD OF INVENTION

The invention relates to an electrical junction box according to the preamble of claim 1 (see JP 2009 033870 A).

### BACKGROUND OF INVENTION

Electrical junction boxes are widely used in the art. These junction boxes comprise usually housings made of sheet metal or plastics. To enable replacing fuses or other electronic modules while assembly or service, the junction boxes use two-part housings. The two parts of the housing have to be separable when needed. The housing parts can be screwed together or can be snapped together by several well-known snap solutions. A well-known snap solution uses tongs having a protrusion and extends from the first housing part that the second housing part is having pockets that receive the tongs while mating. After mating, the protrusions lock in the pockets and hold the two housing parts together.

The existing designs work well when the housings are made from PA6/PA66 material combination because the material is quite flexible. Unfortunately this well-known material has also disadvantages especially for usage in vehicles.one disadvantage is that the material is expensive compared to other materials. An opportunity to lower the price of junction boxes by considering alternative materials guides to a material that is known in the industrial area as PBT GF20. Unfortunately, this material shows in production a lower strain at break limit. The known designs do not work with the new material because the pockets crack while assembly.

There is a need in the art to provide a junction box having a two part housing that can be easy snapped together thereby being robust while assembly and over the lifetime. Furthermore, the junction box has to be cheap in production and easy to assemble.

An electrical junction box according claim1 solves these and other objects, which become apparent upon reading the following description.

### SUMMARY OF THE INVENTION

The present application relates to an electrical junction box comprising a housing, comprising a first cover and a second cover. The first cover comprises a first wall, two lateral projections extending from the first wall. A cross bar is connecting the lateral projections, surrounding a rectangular opening. The second cover comprises a second wall. An elongated tongue extends from the second wall, thereby protruding through the rectangular opening. An end portion of the elongated tongue comprises a lock protrusion, protruding in a protrusion angle from the elongated tongue. The lock protrusion is having a lock surface that is in engagement with the cross bar, when the elongated tongue is fully received in the rectangular opening. The elongated tongue comprises two lateral arms extending from the second wall and a cross lock bar, arranged perpendicular to the lateral arms along a turn axis, connecting the lateral arms on their arm ends. The lock protrusion is arranged in the middle of the cross lock bar.

The disclosed invention designs the tongue that is pushed through the opening of the counter housing part more flexible or in other words softer. The more flexible tongue is now, in relation to the in prior art shown tongue, the weaker part of the snap connection. A crack of the pocket while assembly is prevented because the tongue deforms itself and not the pocket, when the tongue is moved through the pocket. The feature that is named "pocket" as it is used in this document represents the part that is defined by a part of the first wall, the two lateral projections and the cross bar. Unwanted strain is taken from pocket, because the lateral arms and the cross lock bar have a small cross-section, they are quite flexible even when made out of PBT GF20 material. The extension length of the protrusion from the middle, along the turn axis, towards the lateral arms can vary. A bigger extension length provides a wider protrusion and a more stiff snapping result. The portions of the cross lock bar that are in between the protrusion and the lateral arms provide mainly the flexibility for the snap action. These portions generate torsion spring force by flexible deforming around the turn axis. The rectangular opening does not need to be exactly rectangular shaped. It can also be slit shaped or oval. A rectangular opening in combination with a tongue having a rectangular cross-section provides a better guiding while assembly.

According to the invention, the lock protrusion is partly, flexibly rotatable around the turn axis, when a force act against the lock protrusion, thereby flexible deforming the cross lock bar. The flexibility allows to the lock protrusion to retreat when a force acts and flex back when the force is gone.

The rotation angle around the turn axis is less than 45°. The rotation angle has to be carefully designed to prevent damages of the cross lock bar. The dimensions and the geometry of all cooperating features have to be balanced.

The lock protrusion protrudes from a free end of the elongated tongue defining a protrusion angle to the elongated tongue of less than 45°. The protrusion protrudes from the tongue to provide the locking function.

Preferably, the cross bar comprises an inner guide surface arranged opposite to the first wall, wherein the inner guide surface is in sliding communication with a slide surface of the lock protrusion when the lock protrusion is moved through the rectangular opening while mating the first cover and the second cover. While mating the covers the cross lock bar is partly deformed providing torsion spring force.

Advantageously, the distance of the two lateral projections is determined about an opening length of the rectangular opening and wherein the length of the two lateral projections determines about an opening width of the rectangular opening. A variation of the dimensions allows combinations with current available counter covers.

When the covers are fully mated, there is no torsion stress on the cross lock bar.

While mating the covers, the cross lock bar is partly deformed by the protrusion that pushes against the cross bar when starting the mating process. The protrusion swings in a free space between the lateral arms thereby reducing the relaxed width to the flexed width to enable pass through the tongue through the rectangular opening.

In a preferred embodiment, the slide surface starting from the lock surface is extending towards the free end of the elongated tongue. That provides a continuous sliding support.

Preferably, the slide surface is plane or curved. The push forces, that are required to assemble the covers, can be adapted by design the slide surface.

Advantageously, the lateral arms and the cross lock bar define a plane and wherein the lock protrusion is in this plane when the lock protrusion is moved through the rectangular opening while mating the first cover and the second cover. This enables an easy assembly process.

Preferably, the second cover is made of PBT GF20. This assembly allows use of first covers made from other materials with second covers made of PBT GF20. That makes the production process more flexible.

In a preferred embodiment, the first cover and the second cover is made of PBT GF20. That allows providing a cheap and robust cover for a junction box.

### Description of the preferred embodiments

In the following, the invention is described exemplarily with reference to the enclosed figures, in which
- Fig. 1: shows a perspective, view to an inventive junction box;
- Fig. 2: shows a perspective, view to the snap features of a junction box, known in the prior art;
- Fig. 3: shows a perspective, view to a tongue known in the prior art;
- Fig. 4: shows a cut view of the snap features, known in the prior art;
- Fig. 5: shows a perspective, view to snap feature of the inventive junction box;
- Fig. 6: shows a perspective, view to tongue of the inventive junction box;
- Fig. 7: shows a detailed perspective, view to the tongue of the inventive junction box;
- Fig. 8: shows a cut view of the snap features, while mating process;
- Fig. 9: shows a cut view of the snap features, after mating process;

The reference signs for the same features in the prior art drawings and in the drawings that disclose the inventive junction box are the same.

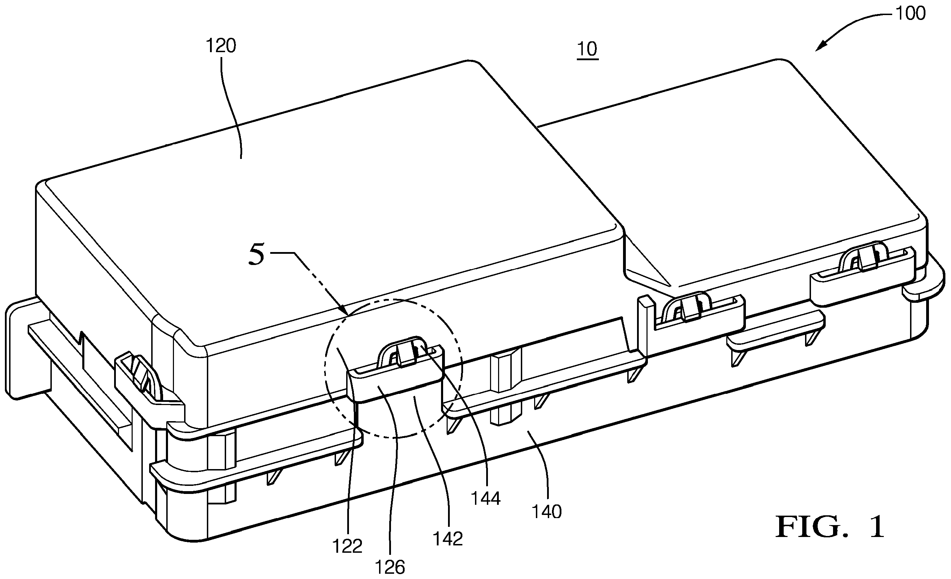

Figure 1 shows a perspective, view to an inventive junction box 10. The electrical junction box 10 has a housing 100, comprising a first cover 120 and a second cover 140. The first cover 120 comprises a first wall 122, two lateral projections 124 extending from the first wall 122. A cross bar 126 is connecting the lateral projections 124, surrounding a rectangular opening 128. The rectangular opening 128 does not need to be rectangular shaped. The opening can also be slit shaped or oval. The second cover 140 comprises a second wall 142. An elongated tongue 144 extends from the second wall 142, thereby protruding through the rectangular opening 128.

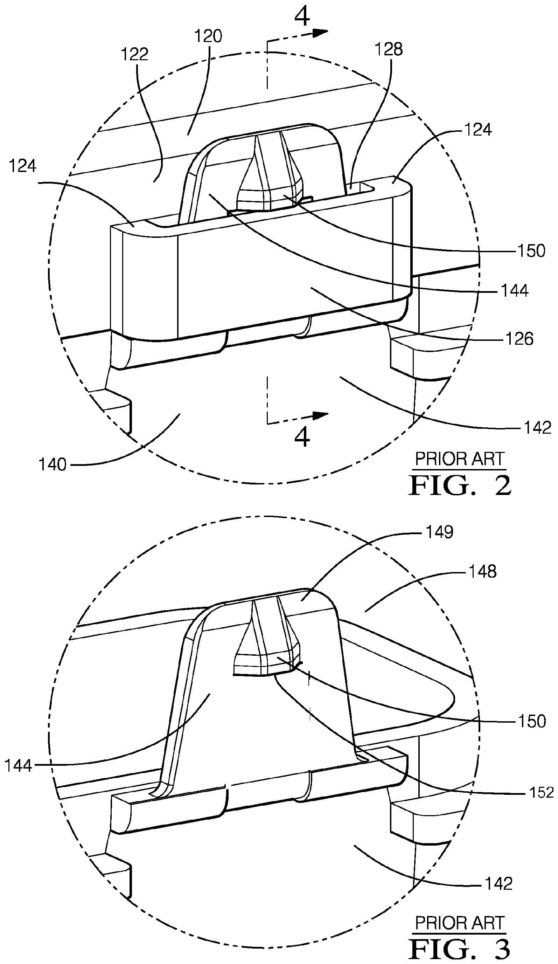

Figure 2 and figure 3 show a detailed perspective, view to the snap features of a junction box, known in the prior art. An end portion 149 of the elongated tongue 144 comprises a lock protrusion 150 protruding in a protrusion angle P from the elongated tongue 144. The lock protrusion 150 is having a lock surface 152 that is in engagement with the cross bar 126.

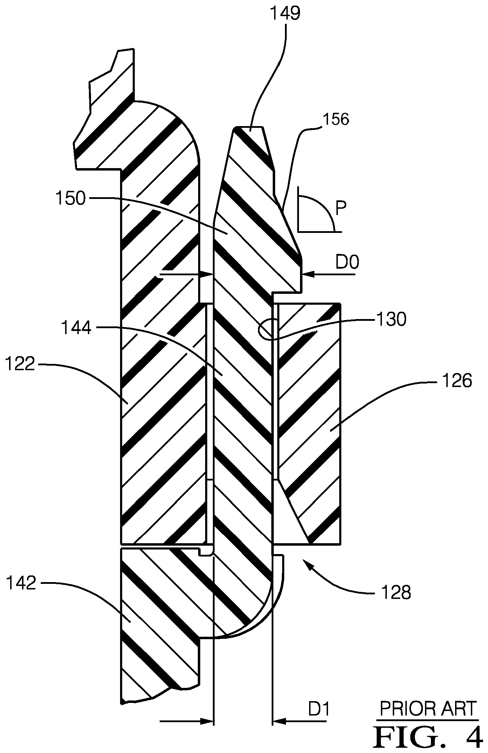

Figure 4 shows a cut view of the snap features, of a junction box known in the prior art. The lock protrusion 150 protrudes from an end portion 149 of the elongated tongue 144 in a protrusion angle P of 90° in relation to the elongated tongue 144. The elongated tongue 144 and the lock protrusion 150 is having, perpendicular to the mating axis X, a width D0. The distance of the two lateral projections 124 determines about an opening length of the rectangular opening 128. The length of the two lateral projections 124 determine about an opening width D1 of the rectangular opening 128. The width D0 is bigger than the opening width D1. The cross bar 126 comprises an inner guide surface 130 arranged opposite to the first wall 142. The inner guide surface 130 is in sliding communication with a slide surface 156 of the lock protrusion 150 when the lock protrusion 150 is moved through the rectangular opening 128, while mating the first cover 120 and the second cover 140. While sliding through the rectangular opening, the lock protrusion 150 deforms the cross bar 126 in a direction, away from the first wall 142. Depending on the material properties, this deformation can tear the cross bar 126.

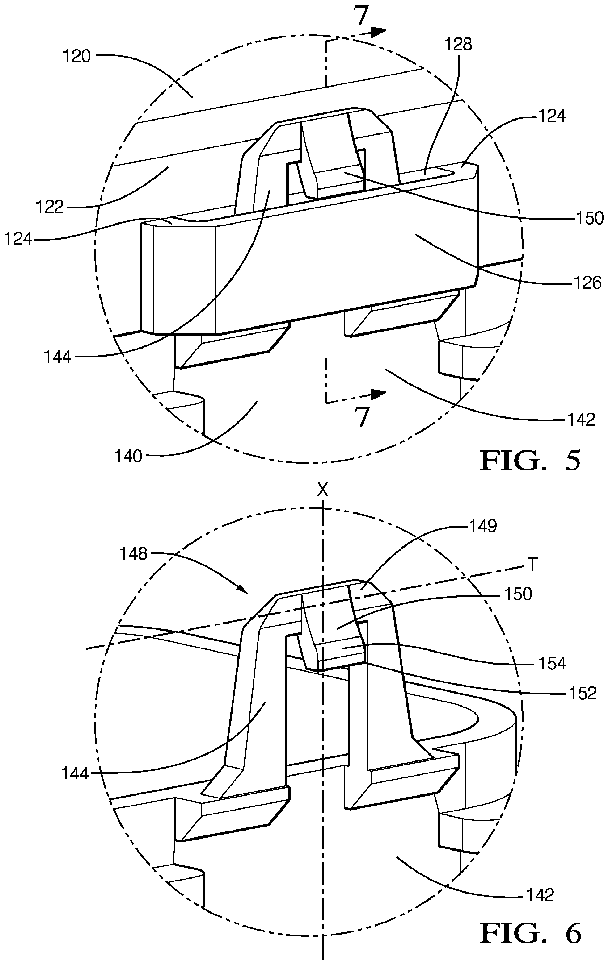

Figure 5 and figure 6 show a perspective, view to the snap features of the inventive junction box. The elongated tongue 144 comprises two lateral arms 160 extending from the second wall 142 and a cross lock bar 166, arranged perpendicular to the lateral arms 160 along a turn axis T. The cross lock bar 166 is connecting the lateral arms 160 on their arm ends 162. The lock protrusion 150 is arranged in the middle of the cross lock bar 126. The lock protrusion 150 protrudes from a free end 149 of the elongated tongue 144 defining a protrusion angle P to the elongated tongue 144 of less than 45°. The lock protrusion 150 is having a lock surface 152 that is in engagement with the cross bar 126.

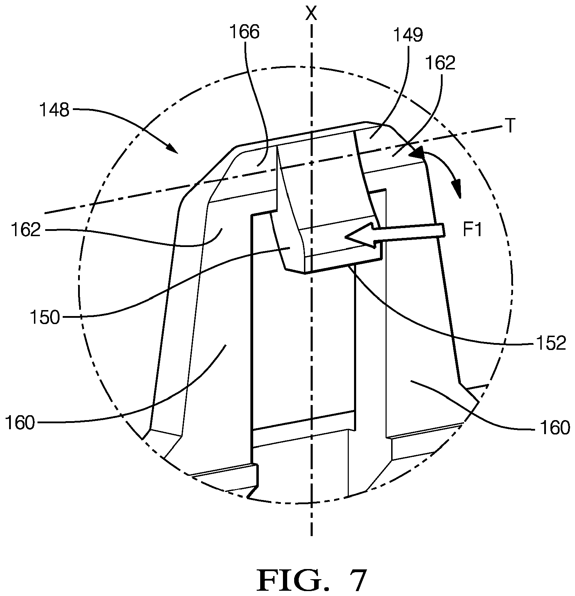

Figure 7 shows a detailed perspective, view to the tongue of the inventive junction box. The lock protrusion 150 is partly, flexibly rotatable around the turn axis T, when a forces F1 act against the lock protrusion 150, thereby flexible deforming the cross lock bar 166. The rotation angle around the turn axis T is less than 45°.

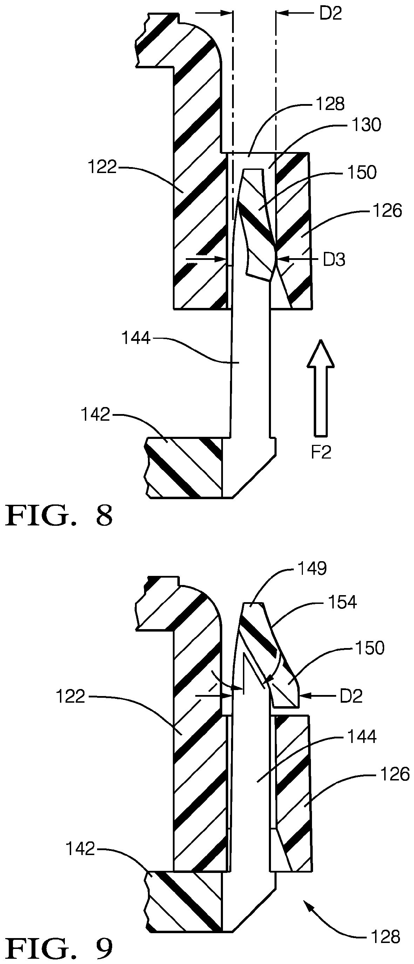

Figure 8 shows a cut view of the snap features, while mating process. The lock protrusion 150 is moved through the rectangular opening 128. A push force F2 applied in mating direction X to the second cover 140 turns the protrusion 150 around the turn axis T when the protrusion urges against the cross bar 126 whereby the cross bar 126 applies a turn force F1 to the protrusion 150. The elongated tongue 144 and the lock protrusion 150 having, perpendicular to the mating axis X, a flexed width D3, wherein the flexed width D3 is smaller than the opening width D1 when the first cover 120 and the second cover 140 are in mating process, whereby the lock protrusion 150 is located in the rectangular opening 128. The cross bar 126 comprises an inner guide surface 130 arranged opposite to the first wall 142. The inner guide surface 130 is in sliding communication with a slide surface 154 of the lock protrusion 150 while mating the first cover 120 and the second cover 140. The lateral arms 160 and the cross lock bar 166 define a plane. The lock protrusion 150 is in this plane while the lock protrusion 150 is moved through the rectangular opening 128.

Figure 9 shows a cut view of the snap features, after the mating process. The elongated tongue 144 and the lock protrusion 150 are having a relaxed width D2, perpendicular to the mating axis X. The relaxed width D2 is bigger than the opening width D1 when the first cover 120 and the second cover 140 are fully mated. The slide surface 154 starting from the lock surface 152 extends towards the free end 149 of the elongated tongue 144.

## Claims

1. An electrical junction box (10) comprising a housing (100), comprising a first cover (120) and a second cover (140), wherein the first cover (120) comprises a first wall (122), two lateral projections (124) extending from the first wall (122) and a cross bar (126) connecting the lateral projections (124), surrounding a rectangular opening (128), wherein the second cover (140) comprises a second wall (142), an elongated tongue (144) extends from the second wall (142), wherein the elongated tongue (144) protrudes through the rectangular opening (128), an end portion (148) of the elongated tongue (144) comprises a lock protrusion (150) protruding in an protrusion angle (P) from the elongated tongue (144), the lock protrusion (150) having a lock surface (152) that is in engagement with the cross bar (126) when the elongated tongue (144) is fully received in the rectangular opening (128), wherein
the elongated tongue (144) comprises two lateral arms (160) extending from the second wall (142) and a cross lock bar (166) arranged perpendicular to the lateral arms (160),
the cross lock bar (166) connecting the lateral arms (160) on their arm ends (162), wherein the lock protrusion (150) is arranged in the middle of the cross lock bar (126), and
the elongated tongue (144) and the lock protrusion (150) have perpendicular to a mating axis (X) a relaxed width D2,
**characterized in that**
the cross lock bar (166) is arranged along a turn axis (T),
the lock protrusion (150) is partly, flexibly rotatable around the turn axis (T), when a force (F1) act against the lock protrusion (150), thereby flexible deforming the cross lock bar (166),
the rotation angle (P) around the turn axis (T) is less than 45°, and
the relaxed width D2 is bigger than a flexed width D3 when the protrusion urges against the cross bar in the mating process, and
the lock protrusion (150) protrudes from a free end (149) of the elongated tongue (144) defining a protrusion angle (P) to the elongated tongue (144) of less than 45°.

2. An electrical junction box (10) according to claim 1, wherein the cross bar (126) comprises an inner guide surface (130) arranged opposite to the first wall (142), wherein the inner guide surface (130) is in sliding communication with a slide surface (154) of the lock protrusion (150) when the lock protrusion (150) is moved through the rectangular opening (128) while mating the first cover (120) and the second cover (140).

3. An electrical junction box (10) according to any preceding claim, wherein the distance of the two lateral projections (124) determine about an opening length (L) of the rectangular opening (128) and wherein the length of the two lateral projections (124) determine about an opening width (D1) of the rectangular opening (128).

4. An electrical junction box (10) according to claim 3, wherein the slide surface (154) starting from the lock surface (152) extends towards the free end (149) of the elongated tongue (144).

5. An electrical junction box (10) according to claim 3, wherein the slide surface (154) is plane or curved.

6. An electrical junction box (10) according to any preceding claim, wherein the lateral arms (160) and the cross lock bar (166) define a plane and wherein the lock protrusion (150) is in this plane when the lock protrusion (150) is moved through the rectangular opening (128) while mating the first cover (120) and the second cover (140).

7. An electrical junction box (10) according to any preceding claim, wherein the second cover (120) is made of PBT GF20.

8. An electrical junction box (10) according to any preceding claim, wherein the first cover (120) and the second cover (140) is made of PBT GF20.

## Patentansprüche

1. Elektrischer Anschlusskasten (10), der ein Gehäuse (100) umfasst, das eine erste Abdeckung (120) und eine zweite Abdeckung (140) umfasst, wobei die erste Abdeckung (120) eine erste Wand (122), zwei seitliche Vorsprünge (124), die sich von der ersten Wand (122) aus erstrecken, und einen Querbalken (126), der die seitlichen Vorsprünge (124) verbindet und eine rechteckige Öffnung (128) umgibt, umfasst, wobei die zweite Abdeckung (140) eine zweite Wand (142) umfasst, eine langgestreckte Zunge (144) sich von der zweiten Wand (142) aus erstreckt, wobei die langgestreckte Zunge (144) durch die rechteckige Öffnung (128) hindurchragt, ein Endabschnitt (148) der langgestreckten Zunge (144) einen Verriegelungsvorsprung (150) umfasst, der unter einem Vorsprungswinkel (P) von der langgestreckten Zunge (144) vorsteht, wobei der Verriegelungsvorsprung (150) eine Verriegelungsfläche (152) aufweist, die mit dem Querbalken (126) in Eingriff steht, wenn die langgestreckte Zunge (144) vollständig in der rechteckigen Öffnung (128) aufgenommen ist, wobei
die langgestreckte Zunge (144) zwei seitliche Arme (160), die sich von der zweiten Wand (142) aus erstrecken, und einen Querverriegelungsbalken (166), der rechtwinklig zu den seitlichen Armen (160) angeordnet ist, umfasst
der Querverriegelungsbalken (166) die seitlichen Arme (160) an ihren Armenden (162) verbindet, wobei der Verriegelungsvorsprung (150) in der Mitte des Querverriegelungsbalkens (126) angeordnet ist, und
die langgestreckte Zunge (144) und der Verriegelungsvorsprung (150) eine entspannte Breite D2 rechtwinklig zu einer Steckachse (X) aufweisen,
**dadurch gekennzeichnet, dass**
der Querverriegelungsbalken (166) entlang einer Drehachse (T) angeordnet ist,
der Verriegelungsvorsprung (150) teilweise flexibel um die Drehachse (T) drehbar ist, wenn eine Kraft (F1) auf den Verriegelungsvorsprung (150) wirkt, wodurch der Querverriegelungsbalken (166) flexibel verformt wird,
der Drehwinkel (P) um die Drehachse (T) weniger als 45° beträgt und
die entspannte Breite D2 größer ist als eine gebogene Breite D3, wenn der Vorsprung beim Steckvorgang gegen den Querbalken drückt, und
der Verriegelungsvorsprung (150) von einem freien Ende (149) der langgestreckten Zunge (144) vorsteht und einen Vorsprungswinkel (P) mit der langgestreckten Zunge (144) von weniger als 45° definiert.

2. Elektrischer Anschlusskasten (10) nach Anspruch 1, wobei der Querbalken (126) eine innere Führungsfläche (130) umfasst, die gegenüber der ersten Wand (142) angeordnet ist, wobei die innere Führungsfläche (130) in gleitender Verbindung mit einer Gleitfläche (154) des Verriegelungsvorsprungs (150) steht, wenn der Verriegelungsvorsprung (150) durch die rechteckige Öffnung (128) hindurch bewegt wird, während die erste Abdeckung (120) und die zweite Abdeckung (140) zusammengefügt werden.

3. Elektrischer Anschlusskasten (10) nach einem der vorhergehenden Ansprüche, wobei der Abstand der beiden seitlichen Vorsprünge (124) in etwa eine Öffnungslänge (L) der rechteckigen Öffnung (128) bestimmt und wobei die Länge der beiden seitlichen Vorsprünge (124) in etwa eine Öffnungsbreite (D1) der rechteckigen Öffnung (128) bestimmt.

4. Elektrischer Anschlusskasten (10) nach Anspruch 3, wobei sich die Gleitfläche (154) ausgehend von der Verriegelungsfläche (152) in Richtung des freien Endes (149) der langgestreckten Zunge (144) erstreckt.

5. Elektrischer Anschlusskasten (10) nach Anspruch 3, wobei die Gleitfläche (154) eben oder gekrümmt ist.

6. Elektrischer Anschlusskasten (10) nach einem der vorhergehenden Ansprüche, wobei die seitlichen Arme (160) und der Querverriegelungsbalken (166) eine Ebene definieren und wobei der Verriegelungsvorsprung (150) in dieser Ebene liegt, wenn der Verriegelungsvorsprung (150) durch die rechteckige Öffnung (128) hindurch bewegt wird, während die erste Abdeckung (120) und die zweite Abdeckung (140) zusammengefügt werden.

7. Elektrischer Anschlusskasten (10) nach einem der vorhergehenden Ansprüche, wobei die zweite Abdeckung (120) aus PBT GF20 hergestellt ist.

8. Elektrischer Anschlusskasten (10) nach einem der vorhergehenden Ansprüche, wobei die erste Abdeckung (120) und die zweite Abdeckung (140) aus PBT GF20 hergestellt sind.

## Revendications

1. Boîte de jonction électrique (10) comprenant un boîtier (100), comprenant une première couverture (120) et une seconde couverture (140), dans laquelle la première couverture (120) comprend une première paroi (122), deux projections latérales (124) s'étendant depuis la première paroi (122), et une barre transversale (126) connectant les projections latérales (124), entourant une ouverture rectangulaire (128), dans laquelle la seconde couverture (140) comprend une seconde paroi (142), une langue allongée (144) s'étend depuis la seconde paroi (142), dans laquelle la langue allongée (144) se projette à travers l'ouverture rectangulaire (128), une portion d'extrémité (148) de la langue allongée (144) comprend une projection de verrouillage (150) se projetant dans un angle de projection (P) par rapport à la langue allongée (144), la projection de verrouillage (150) ayant une surface de verrouillage (152) qui est en engagement avec la barre transversale (126) quand la langue allongée (144) est entièrement reçue dans l'ouverture rectangulaire (128), dans laquelle
la langue allongée (144) comprend deux bras latéraux (160) s'étendant depuis la seconde paroi (142) et une barre de verrouillage transversale (166) agencée perpendiculairement aux bras latéraux (160),
la barre de verrouillage transversale (166) connectant les bras latéraux (160) sur leurs extrémités de bras (162), dans laquelle la projection de verrouillage (150) est agencée dans le milieu de la barre de verrouillage transversale (126), et
la langue allongée (144) et la projection de verrouillage (150) ont, perpendiculairement à un axe d'appariement (X), une largeur en détente D2,
**caractérisée en ce que**
la barre de verrouillage transversale (166) est agencée le long d'un axe de pivotement (T),
la projection de verrouillage (150) peut être partiellement mise en rotation de manière flexible le long de l'axe de pivotement (T) quand une force (F1) agit à l'encontre de la projection de verrouillage (150), déformant ainsi de manière flexible la barre de verrouillage transversale (166),
l'angle de rotation (P) autour de l'axe de pivotement (T) est inférieur à 45°, ets
la largeur en détente D2 est plus grande qu'une largeur en flexion D3 quand la projection force contre la barre transversale dans le processus d'appariement, et
la projection de verrouillage (150) se projette depuis une extrémité libre (149) de la langue allongée (144) définissant un angle de projection (P) par rapport à la langue allongée (144) de moins de 45°.

2. Boîte de jonction électrique (10) selon la revendication 1, dans laquelle la barre transversale (126) comprend une surface de guidage intérieure (130) agencée à l'opposé de la première paroi (142), dans laquelle la surface de guidage intérieure (130) est en communication coulissante avec une surface de coulissement (154) de la projection de verrouillage (150) quand la projection de verrouillage (150) est déplacée à travers l'ouverture rectangulaire (128) tout en appariant la première couverture (120) et la seconde couverture (140).

3. Boîte de jonction électrique (10) selon l'une quelconque des revendications précédentes, dans laquelle la distance des deux projections latérales (124) détermine une longueur d'ouverture (L) de l'ouverture rectangulaire (128) et dans laquelle la longueur des deux projections latérales (124) détermine une largeur d'ouverture (D1) de l'ouverture rectangulaire (128).

4. Boîte de jonction électrique (10) la revendication 3, dans laquelle la surface de coulissement (154) démarrant depuis la surface de verrouillage (154) s'étendant vers l'extrémité libre (149) de la langue allongée (144).

5. Boîte de jonction électrique (10) selon la revendication 3, dans laquelle la surface de coulissement (154) est plane ou incurvée.

6. Boîte de jonction électrique (10) selon l'une quelconque des revendications précédentes, dans laquelle les bras latéraux (160) et la barre de verrouillage transversale (166) définissent un plan et dans laquelle la projection de verrouillage (150) est dans ce plan quand la projection de verrouillage (150) est déplacée à travers l'ouverture rectangulaire (128) tout en appariant la première couverture (120) et la seconde couverture (140).

7. Boîte de jonction électrique (10) selon l'une quelconque des revendications précédentes, dans laquelle la seconde couverture (120) est faite en PBT GF20.

8. Boîte de jonction électrique (10) selon l'une quelconque des revendications précédentes, dans laquelle la première couverture (120) et la seconde couverture (140) sont faites en PBT GF20.
